# EUROPÄISCHE PATENTANMELDUNG

(11) **EP 2 067 673 A2**
(43) Veröffentlichungstag der Anmeldung: **10.06.2009**
(21) Anmeldenummer: 08170766.3
(22) Anmeldetag: 05.12.2008
(51) Int. Cl.: B60S 1/34

(54) **Anpresseinrichtung**

(30) Priorität: 06.12.2007 DE 102007059034
(71) Anmelder: Karl Miller GmbH, 77933 Lahr (DE)
(72) Erfinder: Feyerabend, Andy, 77933 Lahr (DE)
(74) Vertreter: Hutzelmann, Gerhard

(57) **Zusammenfassung**

Anpresseinrichtung für ein einseitig gelagertes Teil, insbesondere einen einseitig gelagerten Arm(7,8) eines Scheibenwischers(3), wobei wenigstens annähernd im Bereich der Drehachse des Scheibenwischer-Arms(7,8) ein Druck- bzw. Zugelement(15,16) gelagert ist, dessen anders Ende am Scheibenwischer-Arm(7,8) angreift und diesen gegen eine Unterlage, vorzugsweise eine Glasscheibe(2) drückt bzw. zieht.

## Beschreibung

Die Erfindung bezieht sich auf eine Anpresseinrichtung für ein einseitig gelagertes Teil, insbesondere einen einseitig gelagerten Arm eines Scheibenwischers.

Insbesondere bei Scheibenwischern wird der Anpressdruck durch Federn erzeugt, die im Bereich eines Kipplagers angeordnet sind.

Der so erzeugte Anpressdruck ist aber in vielen Fällen nicht ausreichend.

Der Erfindung liegt daher die Aufgabe zugrunde, eine Anpresseinrichtung vorzuschlagen, mit der ein sicheres Anliegen des Scheibenwischers gewährleistet ist.

Diese Aufgabe wird erfindungsgemäß dadurch gelöst, dass wenigstens annähernd im Bereich der Drehachse des Scheibenwischer-Arms ein Druck- bzw. Zugelement gelagert ist, dessen anders Ende am Scheibenwischer-Arm angreift und diesen gegen eine Unterlage, vorzugsweise eine Glasscheibe drückt bzw. zieht.

Durch die Anordnung des Druck- bzw. Zugelementes unabhängig vom Scheibenwischer-Arm kann diese entsprechend groß ausgebildet sein und somit mehr Kraft aufbringen als eine in den Wischerarm integrierte Feder.
Darüber hinaus kann das Druck- bzw. Zugelement nahe der Mitte des Armes an diesem angreifen, so dass eine optimale Krafteinleitung erreicht wird.

Eine vorteilhafte Ausgestaltung der Erfindung ist **dadurch gekennzeichnet, dass** die Drehachse des Scheibenwischer-Arms über diesen hinaus verlängert ist und eine Aufnahme für das eine Ende eines Druckelementes aufweist.

Damit ist eine verhältnismäßig einfach zu realisierende Anordnung eines externen Druckelementes erreicht.

Gemäß einer vorteilhaften Weiterentwicklung der Erfindung wird vorgeschlagen, dass ein vorgespanntes Druckelement vorgesehen ist.

Erfindungsgemäß ist es jedoch auch möglich, dass das Druck-bzw. Zugelement im eingebauten Zustand spannbar ausgebildet ist.

In beiden Fällen kann auf einfache Weise ein optimaler Anpressdruck erreicht werden.

Eine ebenfalls sehr vorteilhafte Ausgestaltung der Erfindung wird dadurch erreicht, dass die Lager für das Druckelement als Kugelzapfenlager ausgebildet sind, während am Druckelement die Aufnahmen für die Kugelzapfen angeordnet sind.

Kugelzapfen und Kugelzapfenlager lassen sich sehr einfach miteinander verbinden und auch wieder lösen, so dass ein sehr unkompliziertes Anbringen und Entfernen des Druckelementes ermöglicht wird.

Eine weitere vorteilhafte Ausgestaltung der Erfindung ist **dadurch gekennzeichnet, dass** das eine Lager des Druck- bzw. Zugelementes unabhängig von der Drehachse des Scheibenwischer-Arms angeordnet ist

Dadurch kann das Drehlager des Wischerarmes unverändert bleiben und trotzdem ist ein einfaches Anbringen eines Druck- bzw. Zugelementes ermöglicht.

Eine ebenfalls sehr vorteilhafte Ausgestaltung der Erfindung liegt darin, dass für zwei parallele Scheibenwischer-Arme ein gemeinsames Druck- bzw. Zugelement vorgesehen ist.

Dabei hat es sich als sehr vorteilhaft erwiesen, wenn gemäß einer weiteren Ausgestaltung der Erfindung zumindest an den beiden Scheibenwischer-Armen ein Brückenteil zur Aufnahme des einen Endes des Druck- bzw. Zugelementes vorgesehen ist.

Auch bei der Anordnung von zwei im wesentlichen parallel zueinander angeordneten Scheibenwischer-Armen, ist es gemäß einer weiteren vorteilhaften Ausgestaltung der Erfindung möglich, dass an jedem der Scheibenwischer-Arme ein eigenes Druck- bzw. Zugelement angreift.

Dadurch können für jeden Wischerarm unterschiedliche Druckverhältnisse eingestellt werden.

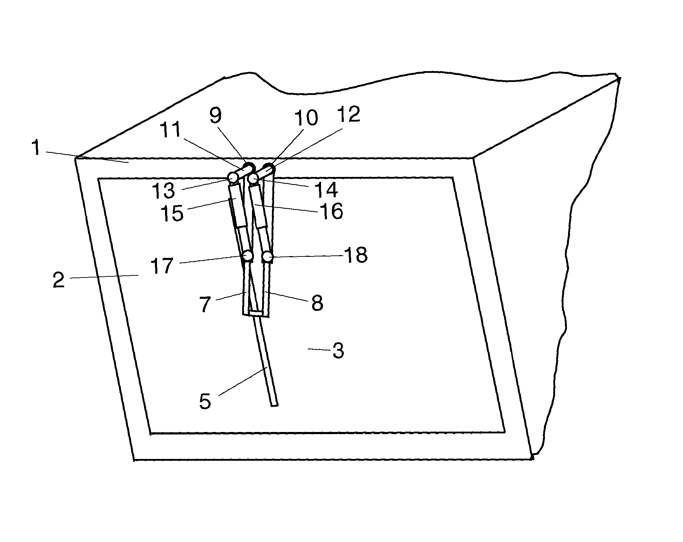

In der Zeichnung ist die Erfindung anhand eines Ausführungsbeispiels veranschaulicht. Dabei zeigt die Figur
eine schaubildliche Darstellung eines doppelarmigen Scheibenwischers an einem Kranfenster

Mit 1 ist eine Krankabine bezeichnet, an deren Frontscheibe 2 ein Scheibenwischer 3 angeordnet ist. Der Scheibenwischer 3 besteht aus einem Wischblatt 5, das an zwei Scheibenwischer-Armen 7 bzw. 8 so befestigt ist, dass es sich beim Schwenken der Scheibenwischer-Arme parallel bewegt.

Jeder der beiden Scheibenwischer-Arme 7,8 ist in einem Drehlager 9 bzw. 10 schwenkbar gelagert und über einen nicht sichtbaren Motor angetrieben. Die beiden Drehlager 9, 10 sind mit einem äußeren am Rahmen der Frontscheibe 2 festgelegten Tragteil versehen, in welchem die eigentliche Drehachse 11 bzw. 12 gelagert ist. Diese Drehachse 11, 12 ist über den Scheibenwischer-Arm 7, 8 hinaus verlängert und trägt am freien Ende eine Aufnahme 13 bzw. 14 für ein Druckelement 15 bzw. 16. Das andere Ende des Druckelementes 15, 16 ist an der Oberseite des Scheibenwischer-Armes 7, 8 angelenkt. Die Aufnahmen 13, 14 können mit einer einfachen Bohrung versehen sein, in welche das Ende des Druckelementes 15, 16 eingesteckt ist. Für das andere Ende des Druckelementes ist zweckmäßigerweise ein Kugelzapfen am Scheibenwischer-Arm befestigt, über welchen eine am Druckelement angeordnete zum Kugelzapfen passende Aufnahme 17 bzw. 18 greift.

Die Druckelemente 15, 16 sind mit Vorspannung versehen, so dass sie einfach angebracht werden müssen um den erwünschten Anpressdruck des Scheibenwischers an der Frontscheibe zu erzielen.

Es ist denkbar als Druckelemente 15 bzw. 16 Federelemente, Gasdruckdämpfer oder dergleichen einzusetzen.

Es ist jedoch auch möglich, die Druckelemente so auszugestalten, dass der Anpressdruck einstellbar ist.

Es ist auch denkbar, für beide Scheibenwischer-Arme ein gemeinsames Druckelement vorzusehen.

Darüber hinaus ist es denkbar anstelle eines Druckelementes auch ein Zugelement an der Unterseite der Scheibenwischer-Arme vorzusehen.

Darüber hinaus ist es denkbar, daß die Druckelemente 15 bzw. 16 an eigenen, im Bereich der Drehachsen vorgesehenen Haltern angelenkt sind.

## Patentansprüche

1. Anpresseinrichtung für ein einseitig gelagertes Teil, insbesondere einen einseitig gelagerten Arm(7,8) eines Scheibenwischers(3), **dadurch gekennzeichnet, dass** wenigstens annähernd im Bereich der Drehachse des Scheibenwischer-Arms(7,8) ein Druck- bzw. Zugelement(15,16) gelagert ist, dessen anders Ende am Scheibenwischer-Arm(7,8) angreift und diesen gegen eine Unterlage, vorzugsweise eine Glasscheibe(2) drückt bzw. zieht.

2. Anpresseinrichtung nach Anspruch 1, **dadurch gekennzeichnet, dass** die Drehachse des Scheibenwischer-Arms(7,8) über diesen hinaus verlängert ist und eine Aufnahme für das eine Ende eines Druckelementes(15,16) aufweist.

3. Anpresseinrichtung nach Anspruch 1 oder 2, **dadurch gekennzeichnet, dass** ein vorgespanntes Druckelement(15,16) vorgesehen ist.

4. Ampresseinrichtung nach einem der vorhergehenden Ansprüche, **dadurch gekennzeichnet, dass** die Lager für das Druckelement als Kugelzapfenlager ausgebildet sind, während am Druckelement(15,16) die Aufnahmen für die Kugelzapfen angeordnet sind.

5. Anpresseinrichtung nach Anspruch 1, **dadurch gekennzeichnet, dass** das eine Lager des Druck- bzw. Zugelementes(15,16) unabhängig von der Drehachse des Scheibenwischer-Arms angeordnet ist

6. Anpresseinrichtung nach einem der vorhergehenden Ansprüche, **dadurch gekennzeichnet, dass** das Druck-bzw. Zugelement(15,16) im eingebauten Zustand spannbar ausgebildet ist.

7. Anpresseinrichtung nach einem der vorhergehenden Ansprüche, **dadurch gekennzeichnet, dass** für zwei parallele Scheibenwischer-Arme(7,8) ein gemeinsames Druck- bzw. Zugelement(15,16) vorgesehen ist.

8. Anpresseinrichtung nach Anspruch 7, **dadurch gekennzeichnet, dass** zumindest an den beiden Scheibenwischer-Armen(7,8) ein Brückenteil zur Aufnahme des einen Endes des Druck- bzw. Zugelementes vorgesehen ist.

9. Anpresseinrichtung nach einem der Ansprüche 1 bis 6, mit zwei im wesentlichen parallel zueinander angeordneten Scheibenwischer-Armen(7,8), **dadurch gekennzeichnet, dass** an jedem der Scheibenwischer-Arme(7,8) ein eigenes Druck-bzw. Zugelement(15,16) angreift.
